# EUROPEAN PATENT APPLICATION

(11) **EP 3 300 096 A1**
(43) Date of publication of application: **28.03.2018**
(21) Application number: 17182416.2
(22) Date of filing: 20.07.2017
(51) Int. Cl.: H01H 33/666, B61G 5/10

(54) **SWITCH UNIT AND RAIL CAR USING THE SAME**

(30) Priority: 23.09.2016 JP 2016184980
(71) Applicant: Hitachi Industrial Equipment Systems Co., Ltd., Tokyo 101-0022 (JP)
(72) Inventor: SATO, Takashi, Tokyo 100-8280 (JP); YABU, Masato, Tokyo 101-0022 (JP); TAMURA, Kozo, Tokyo 101-0022 (JP); TAI, Yuuki, Tokyo 101-0022 (JP); TSUCHIYA, Kenji, Tokyo 101-0022 (JP)
(74) Representative: Strehl Schübel-Hopf & Partner

(57) **Abstract**

It is an object to provide a switch unit which has a smaller height and a smaller width. The switch unit(70) includes: a switch (1) for making a fixed electrode (3) and a movable electrode (5) come into or out of contact with each other; a first bushing conductor (12A) electrically connected to the fixed electrode (3); a second bushing conductor (12B, 12C) electrically connected to the movable electrode (5); an operation mechanism (30) for supplying a driving force to the switch (1) ; and an insulating case (21) covering the switch (1), the first bushing conductor (12A), and the second bushing conductor (12B, 12C). The direction of movement of the movable electrode (5) and the operation mechanism (30) are virtually in alignment with each other.

## Description

### Technical Field

The present invention relates to a switch unit which is mounted on a rail car and a rail car using the same.

### Background Art

Conventionally, many of the high-voltage pull-through cable systems mounted on rail cars, etc. have not been provided with a switching function. When a high-voltage pull-through cable system does not have a switching function, in the event of an earth fault, a train crew member must separate off the spot of earth fault manually, which may be very troublesome for the crew member. As an example of a high-voltage pull-through cable system which improves this problem, the publication of Japanese Patent No. 5486695 describes a circuit breaker unit with a switching function which is installed on the roof of a rail car.

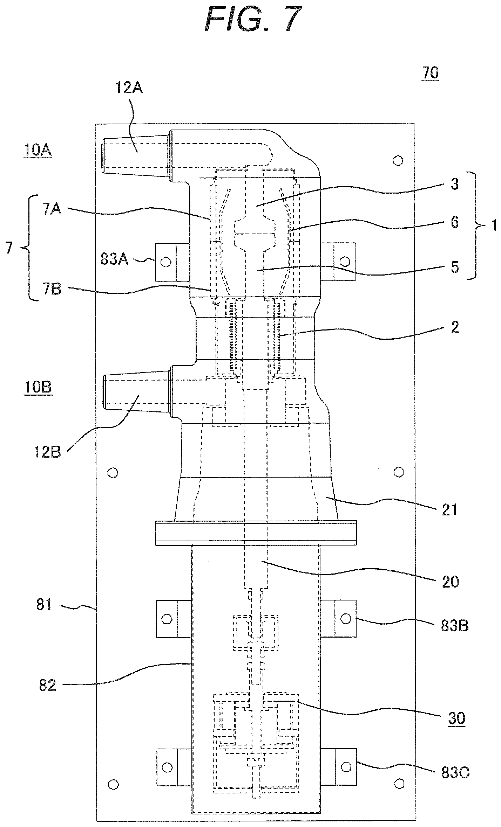

The cable system includes a power collector for collecting power from an overhead line, a circuit breaker unit connected to the power collector and installed on the roof of a rail car, and a plurality of power cables connected to the circuit breaker unit, in which the circuit breaker unit (switch unit) is disposed over the roof and connected to the plural power cables. More specifically, as shown in Fig. 7, etc. of the document, four of the eight bushings of the switch unit are each connected to a high voltage cable with a T-shaped cable head.

### Summary of the Invention

In the technique described in the publication of Japanese Patent No. 5486695, the terminal portion of the switch unit to which a high voltage is applied is exposed and aerially insulated. On the other hand, for the sake of safety, the roof of the car is supposed to have a ground potential. For this reason, it is essential to provide a sufficient distance between the terminal portion of the switch unit and the car roof. In addition, since the circuit breaker unit described in the publication of Japanese Patent No. 5486695 has a structure in which a main body and a control box are vertically separated and connected to each other by a support member, it poses the following problem: inevitably the projected area of the unit is large as seen in the traveling direction and thus the air resistance during traveling of the rail car is large.

On the other hand, for the switch unit to be mounted on the roof of the rail car, available installation space is limited and many dimensional restrictions are put on it, so particularly it is desirable to decrease its height and width in order to not only solve the problem of limited space but also decrease the air resistance during traveling of the rail car.

An object of the present invention is to provide a switch unit which has a smaller height and a smaller width and provide a rail car which uses the switch unit.

In order to solve the above problem, according to an aspect of the present invention, there is provided a switch unit which includes: a switch for making a fixed electrode and a movable electrode come into or out of contact with each other; a first bushing conductor electrically connected to the fixed electrode; a second bushing conductor electrically connected to the movable electrode; an operation mechanism for supplying a driving force to the switch; and an insulating case covering the switch, the first bushing conductor, and the second bushing conductor. The direction of movement of the movable electrode is virtually in alignment with the operation mechanism.

According to the present invention, it is possible to provide a switch unit which has a smaller height and a smaller width and a rail car which uses the switch unit.

### Brief Description of the Drawings

Fig. 1 shows an example of the composition of a train of rail cars according to a first embodiment;
Fig. 2 is a feeding circuit diagram showing the composition of the train of rail cars according to the first embodiment;
Fig. 3 is a plan view of a switch unit according to the first embodiment;
Fig. 4 is a plan view of the switch unit according to the first embodiment to which cables are connected;
Fig. 5 is a plan view of the switch unit shown in Fig. 4 which is housed in an external case;
Fig. 6A is a side view of the switch unit according to the first embodiment;
Fig. 6B is a side view of the switch unit shown in Fig. 6A which is housed in the external case;
Fig. 7 is a plan view of a switch unit according to a second embodiment;
Fig. 8 is a plan view of a switch unit according to a third embodiment;
Fig. 9 is a side view of a switch unit according to a fourth embodiment; and
Fig. 10 is a plan view of a switch unit according to a fifth embodiment.

### Detailed Description of the Preferred Embodiments

Next, the preferred embodiments of the present invention will be described referring to drawings. The embodiments mentioned below are just examples and the present invention is not limited to the concrete embodiments mentioned below. Obviously the present invention may be embodied in various forms including the embodiments mentioned below.

### First Embodiment

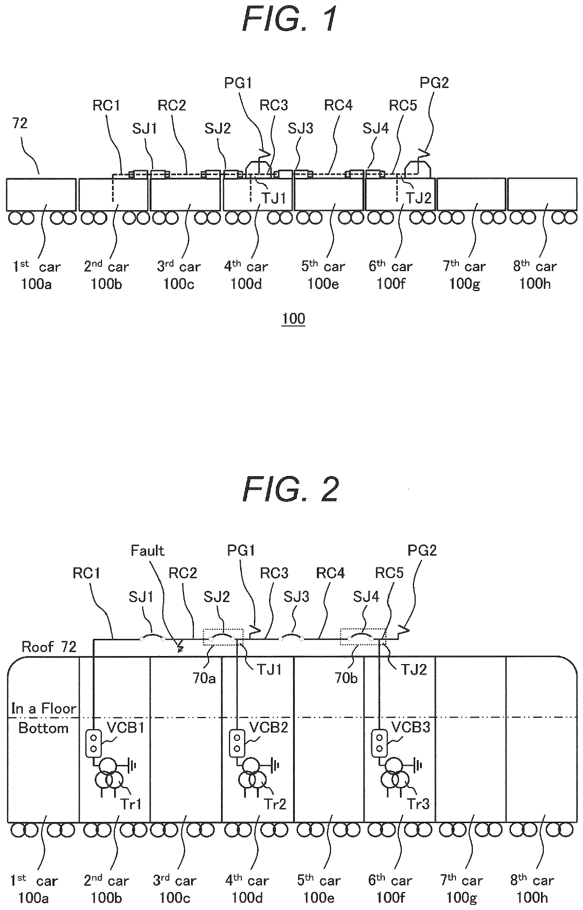

A first embodiment will be described referring to Figs. 1 to 6B.

Fig. 1 shows an example of the composition of a train of rail cars according to a first embodiment. As the figure indicates, the train of rail cars 100 is composed of eight cars, a first car 100a to an eighth car 100h. High-voltage pull-through cables RC1 to RC5 as indicated by dotted lines are disposed over the roofs 72 of the second car 100b to sixth car 100f and high-voltage pull-through cables RC3 and RC5 of the fourth car 100d and the sixth car 100f receive electric power from electric wires (not shown) through pantographs PG1 and PG2. The high-voltage pull-through cables are connected between cars by straight joints SJ1 to SJ4 and the high-voltage pull-through cables RC3 and RC5 are branched toward the bottoms of the cars by T joints TJ1 and TJ2. The T joint TJ1 and the straight joint SJ2 are integrated to constitute part of a switch unit 70a and the T joint TJ2 and the straight joint SJ4 are integrated to constitute part of a switch unit 70b.

Next, the feeding circuit of the rail cars 100 will be described referring to Fig. 2. As shown in the figure, vacuum breakers for receiving power, VCB1, VCB2, and VCB3, and main transformers Tr1, Tr2, and Tr3 are installed on the bottoms of the second car 100b, fourth car 100d, and sixth car 100f respectively.

The high-voltage pull-through cable RC1 of the second car 100b is directly connected to the primary side of the receiving vacuum breaker VCB1 installed on the bottom of the car, the secondary side of the receiving vacuum breaker VCB1 is connected to the primary winding of the main transformer Tr1, the secondary winding of the main transformer Tr1 supplies power to a motor and its tertiary winding supplies power to auxiliary devices such as an air conditioner and a lighting fixture. Similarly, the high-voltage pull-through cables of the fourth car 100d and sixth car 100f which are branched by the T joints TJ1 and TJ2 respectively are connected to the primary sides of the receiving vacuum breakers VCB2 and VCB3 installed on the bottoms of the cars respectively, the secondary sides of the receiving vacuum breakers VCB2 and VCB3 are connected to the primary windings of the main transformers Tr2 and Tr3 respectively, the secondary windings of the main transformers Tr2 and Tr3 supply power to a motor and the tertiary windings supply power to auxiliary devices.

As mentioned above, if an earth fault occurs in a high-voltage pull-through cable system on the roof 72 of a rail car, it is inconvenient for a worker to ascend to the roof 72 in order to separate off the spot of earth fault, so it is desirable to minimize the need for ascending to the roof in his/her work. In addition, in installing a device on the roof 72, the available installation space on the roof 72, particularly in the height direction, is considerably limited and decrease in the height of an electric device is demanded.

In the circuit shown in Fig. 2, if an earth fault Fault occurs in the high-voltage pull-through cable RC2 of the third car 100c, the switch unit 70a is activated according to an external command to open the straight joint SJ2 automatically so that the main transformer Tr1, which would be affected by the earth fault Fault, and the motor connected to the transformer Tr1 are disconnected. At this time, the main transformers Tr2 and Tr3, which will not be affected by the earth fault Fault, remain connected, so the rail cars 100 can continue travelling by the use of the motors connected to the transformers Tr2 and Tr3.

Since this embodiment is explained on the assumption that an earth fault occurs at the spot marked "Fault" in the figures, in order to prevent the spread of the fault the switch unit 70a is activated to open the straight joint SJ2. However, needless to say, the switch unit 70 to be activated or the straight joint SJ to be used for disconnection differs depending on the spot at which an earth fault occurs. Due to this structure, a high voltage cable including a defect and a normal high voltage cable can be separated automatically without the need for a worker to ascend to the roof 72 of the car.

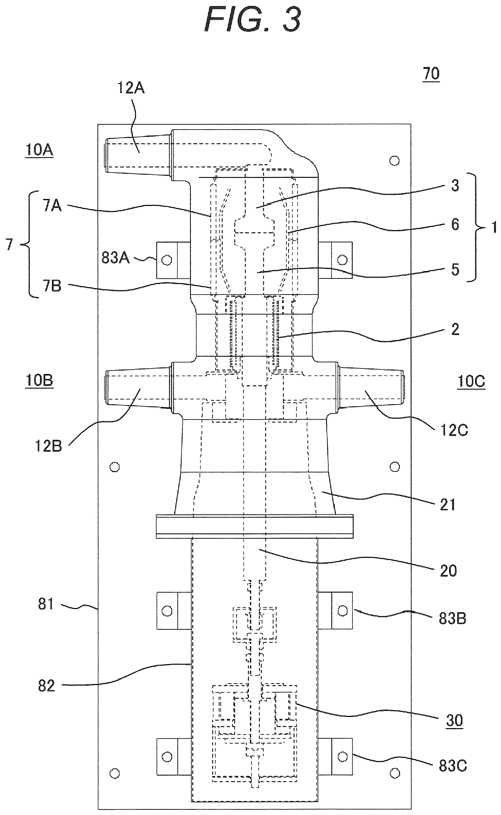

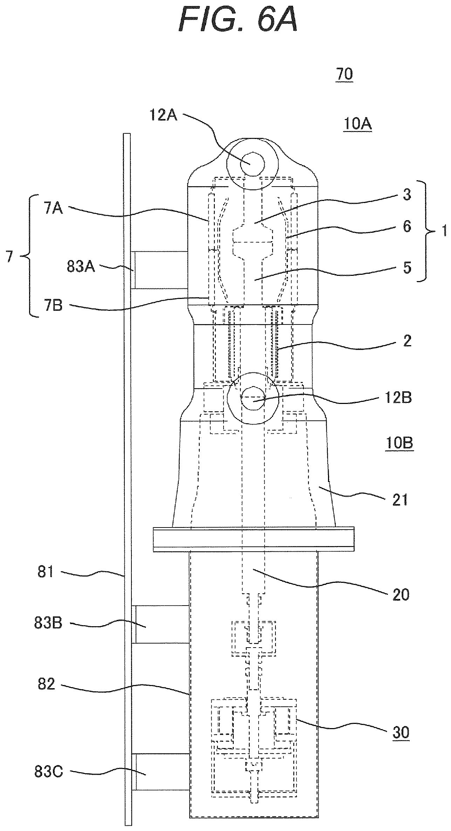

The switch unit 70 (switch for a high-voltage pull-through cable) according to this embodiment will be described in detail referring to the top view of Fig. 3 and the side view of Fig. 6A. As shown in these figures, the switch unit 70 mainly includes a vacuum interrupter 1 which functions as a switch to make a cable connected on the fixed side and a cable connected on the movable side come into or out of contact with each other and an electromagnetic operation device 30 which functions as an operation mechanism to generate a driving force required to make the cables come into or out of contact, in which these components are disposed in alignment with each other.

Although details of the electromagnetic operation device 30 are omitted here, for example it combines a permanent magnet and an electromagnet with a spring to generate a driving force by turning ON or OFF the power to the coil of the electromagnet, in which these magnets are covered by a mechanism case 82.

On the other hand, the vacuum interrupter 1 includes a fixed electrode 3, a movable electrode 5 which comes into or out of contact with the fixed electrode 3, an arc shield 6 covering the peripheries of both the electrodes, and a cylindrical ceramic insulating cylinder 7 supporting the arc shield 6 and constituting part of an outer case of the vacuum interrupter 1, a bellows 2 and so on. Both the ends of the ceramic insulating cylinder 7 are covered with end plates to keep its internal space vacuum. The ceramic insulating cylinder 7 includes a ceramic insulating cylinder 7A and a ceramic insulating cylinder 7B, in which the flange of the arc shield 6 is sandwiched between these cylinders to fix the arc cylinder 6.

The fixed electrode 3 of the vacuum interrupter 1 is electrically connected to a bushing conductor 12A through a fixed conductor pulled out of the vacuum interrupter 1. The movable electrode 5 is electrically connected to bushing conductors 12B and 12C through a movable conductor pulled out of the vacuum interrupter 1 and controlled by an aerial insulating operation rod 20 driven by the electromagnetic operation device 30 so that the movable electrode 5 comes into or out of the fixed electrode 3. The bushing conductors 12A, 12B, and 12C and the insulator of an insulating case 21 are combined to form bushings 10A, 10B, and 10C. Due to this structure, the bushing 10A on the fixed side can be separated from the bushings 10B and 10C on the movable side. The bellows 2 is located between a movable conductor and a movable side end plate so that the movable conductor can move while the vacuum state of the vacuum interrupter 1 is maintained.

The insulating case 21, which is made of epoxy resin or the like and serves as the outer shell of the switch unit 70, molds and encapsulates the vacuum interrupter 1, the bushing conductor 12A on the fixed side and the bushing conductors 12B and 12C on the movable side and also covers the periphery of the aerial insulating operation rod 20 while leaving a given space around the rod. The space around the aerial insulating operation rod 20 is sealed by the insulating case 21 and sealing means and an insulating gas such as dry air or SF6 gas is encapsulated in the space. As the sealing means, a linear seal or bellows is adopted. The aerial insulating operation rod 20 is connected to the electromagnetic operation device 30.

The switch unit 70 mentioned above is fixed on a base 81 with fastening bolts through a stay 83A provided on the insulating case 21 and stays 83B and 83C provided on the mechanism case 82 and when the switch unit 70 is mounted on a rail car 100, it is installed in a manner that the roof 72 of the rail car 100 is in contact with the base 81.

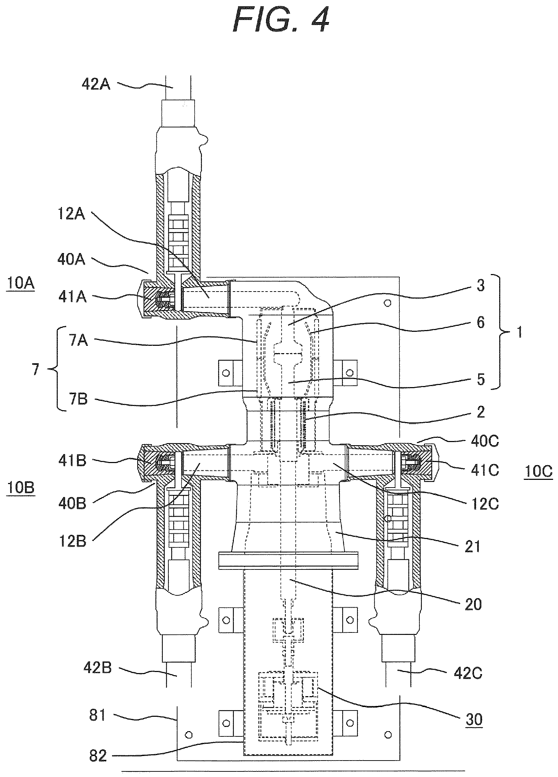

Fig. 4 shows that the switch unit 70 shown in Fig. 3 is installed in a manner that the direction of movement of the movable electrode 5 virtually coincides with the traveling direction of the rail car 100 and the unit 70 is in contact with the top of the roof 72 of the rail car 100, and cables 42A, 42B, and 42C are connected to the bushings 10A, 10B, and 10C respectively. The cable 42A is pulled through in the forward direction of the rail car (left in Figs. 1 and 2), the cable 42B is pulled through in the backward direction of the rail car 100 (right in Figs. 1 and 2), and the cable 42C is connected to the main transformer Tr through the receiving vacuum breaker VCB on the bottom of the car. In other words, the switch unit 70 has a function as a straight joint SJ which connects the cable 42A and cable 42B and a function as a T joint TJ which branches the cable 42C.

As shown in Fig. 4, the bushings 10A, 10B, and 10C to which the T-shaped cable heads 40A, 40B, and 40C of the cables are connected respectively are located laterally to the traveling direction and they are disposed virtually in the same plane as the vacuum interrupter 1 so that a plurality of cables can be connected without interfering with the insulating case 21 (vacuum interrupter 1) and the mechanism case 82 (electromagnetic operation device 30) which are aligned in the front-back direction. Therefore, the overall height and overall width of the switch unit 70 can be smaller and the projected area of the unit as seen in the traveling direction can be smaller than in a conventional switch unit in which the insulating case 21 (vacuum interrupter 1) and the mechanism case 82 (electromagnetic operation device 30) are vertically or horizontally arranged. Consequently, even when the switch unit 70 is installed on the roof 72 of the rail car 100, the resulting increase in air resistance can be suppressed. The T-shaped cable heads 40A, 40B, and 40C are provided with insulating plugs 41A, 41B, and 41C on the opposite side of the connecting ends respectively so that the surface of each of the T-shaped cable heads is kept at the ground potential.

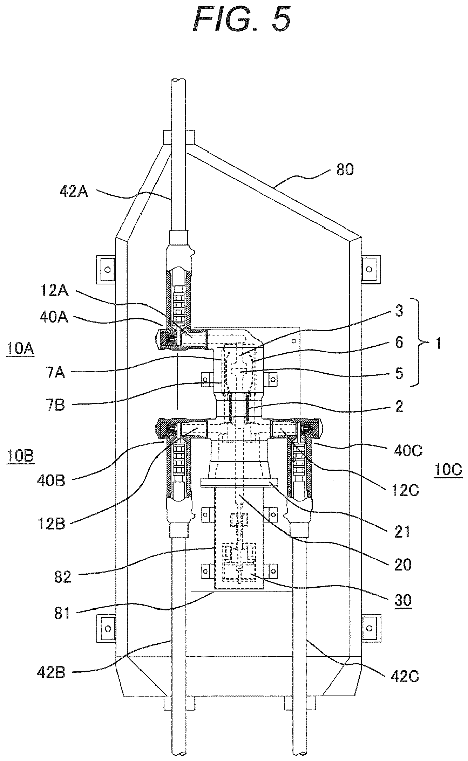

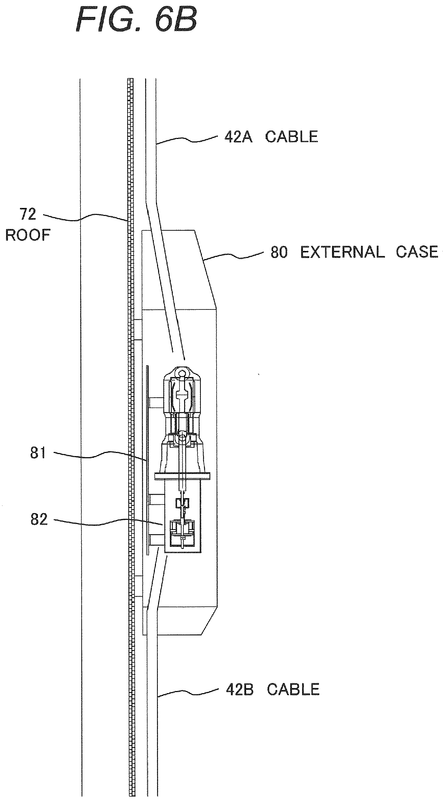

Figs. 5 and 6B show that the switch unit 70 shown in Figs. 4 and 6A is housed in an external case 80 and installed on the roof 72. The external case 80 covers the switch unit 70 with its front inclined portion and its other or planar portion to decrease the air resistance and at the same time mechanically holds the cables 42A to 42C so that the switch unit 70 can be installed on the roof 72 without an unbalanced load on the bushings 10A to 10C. As explained above referring to Fig. 4, the switch unit 70 according to this embodiment has a smaller overall height and a smaller overall width than a conventional switch unit, so the external case 80 which covers the switch unit 70 can be smaller in overall height and overall width and the projected area of the case as seen in the traveling direction can be smaller. Consequently, even when the switch unit 70 installed on the roof 72 is covered by the external case 80, the resulting increase in air resistance can be suppressed.

As explained above, in this embodiment, in order to ensure the safety of workers, all the surfaces of the roof 72 of the rail car 100, the T-shaped cable head 40, and the switch unit 70 have a ground potential. Therefore, it is unnecessary to provide an insulation distance between the switch unit 70 or external case 80 and the roof of the rail car 100 and they can located adjacently to each other. This means that the height from the roof 72 to the top of the switch unit 70 or the external case 80 can be decreased. More specifically, the switch unit 70 or the external case 80 can be installed in contact with the roof 72, so even if the roof 72 of the rail car is higher than before, the pantograph PG can be kept at the same height as before.

Furthermore, since the bushings 10A, 10B, and 10C are disposed virtually perpendicularly to the direction of movement of the movable electrode 5, workability in connecting the T-shaped cable head is improved.

### Second Embodiment

The switch unit 70 according to a second embodiment will be described referring to the plan view of Fig. 7. Description of the same components as in the first embodiment is omitted here.

Whereas in the first embodiment two bushings are provided on the movable side, in this embodiment only one bushing is provided on the movable side. Specifically, the switch unit 70 according to this embodiment has a function as a straight joint SJ which connects a cable 42A and a cable 42B but does not have a function as a T joint TJ.

In the switch unit 70 according to this embodiment, a cable on the movable side cannot be branched but the width of the unit can be smaller than in the first embodiment and when the unit is installed on the roof 72 of the rail car 100, the air resistance can be smaller.

### Third Embodiment

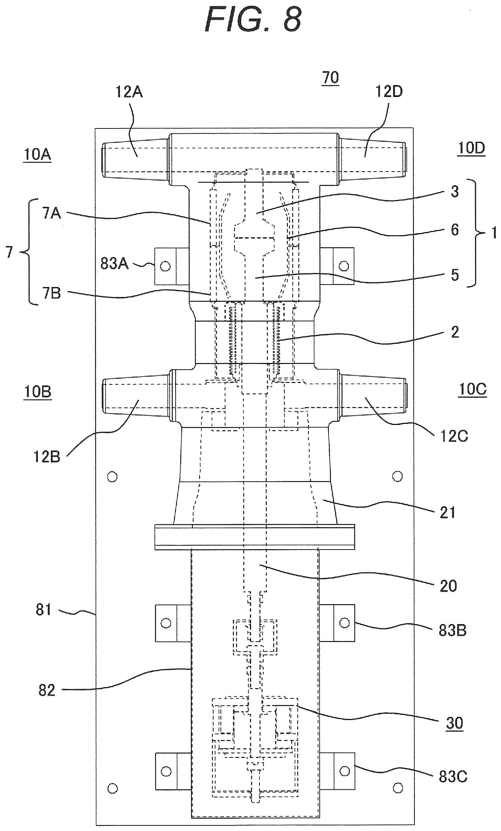

A third embodiment will be described referring to Fig. 8. Description of the same components as in the above embodiments is omitted here.

Whereas in the first embodiment only one bushing is provided on the fixed side, in this embodiment two bushings are provided on the fixed side. Specifically, the switch unit 70 according to this embodiment has a function as a straight joint SJ which connects the cable 42A and cable 42B, a function as a T joint TJ which branches the cable 42C on the movable side, and a function as a T joint TJ which branches the cable 42D (not shown) on the fixed side.

In this embodiment, cables can be branched not only on the movable side but also on the fixed side, so the range of choices of circuit configuration is expanded.

### Fourth Embodiment

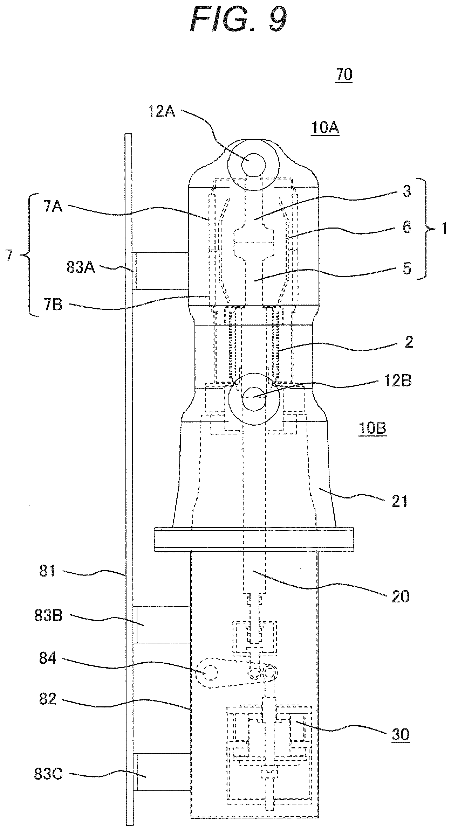

A fourth embodiment will be described referring to Fig. 9. Description of the same components as in the above embodiments is omitted here.

Whereas in the first embodiment three components, namely the vacuum interrupter 1, aerial insulating operation rod 20, and electromagnetic operation device 30, are aligned as shown in the side view of Figs. 6A and 6B, etc., in this embodiment the aerial insulating operation rod 20 and electromagnetic operation device 30 are disposed out of alignment and connected to each other through a link 84 as shown in Fig. 9. This eliminates the need for making the stroke of the electromagnetic operation device 30 equal to the stroke of the vacuum interrupter 1 and even if the output power of the electromagnetic operation device 30 is smaller than in the first embodiment, the link 84, which functions as a lever, enables the vacuum interrupter 1 to operate properly, so the electromagnetic operation device 30 and the vacuum interrupter 1 can be selected independently. Furthermore, adjustment workability is improved.

### Fifth Embodiment

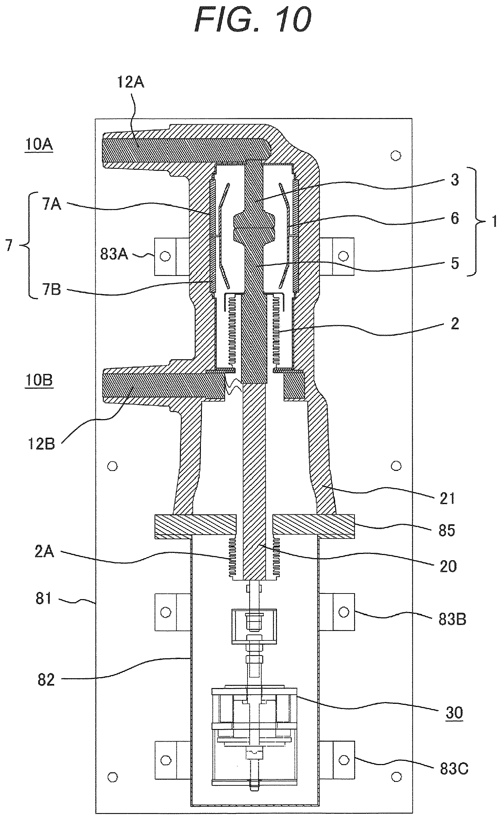

A fifth embodiment will be described referring to Fig. 10. Description of the same components as in the above embodiments is omitted here.

In this embodiment, a bellows 2A which seals an insulating gas between the aerial insulating operation rod 20 and the flange 85 is added to the structure shown in Fig. 3, etc. When the vacuum interrupter 1 is in its closed state, as the electromagnetic operation device 30 is activated to move the movable electrode 5 away from the fixed electrode 3, the bellows 2 on the movable electrode 5 side compresses and the bellows 2A on the opposite side expands, which decreases the internal space of the bellows 2 and increases the internal space of the bellows 2A. In this embodiment, as shown in Fig. 10, the diameter of the bellows 2 is virtually equal to the diameter of the bellows 2A and the amount of compression of the bellows 2, disposed coaxially with the bellows 2A, is equal to the amount of expansion of the bellows 2A, and thus the amount of decrease in volume due to the compression of the bellows 2 is virtually equal to the amount of increase in volume due to the expansion of the bellows 2A. In other words, when the vacuum interrupter 1 is switched from the closed state to the open state, the space around the aerial insulating operation rod 20 sandwiched between both the bellows neither increases nor decreases. For the same reason, when the vacuum interrupter 1 is switched from the open state to the closed state, again the space around the aerial insulating operation rod 20 sandwiched between both the bellows neither increases nor decreases.

Consequently, even when the vacuum interrupter 1 is activated to switch to the open or close state, the change in volume around the aerial insulating operation rod 20 is very small and thus the switching operation force required to open or close the vacuum interrupter 1 can be small.

### Reference Signs List

- 1: Vacuum interrupter
- 2, 2A: Bellows
- 3: Fixed electrode
- 5: Movable electrode
- 6: Arc shield
- 7: Ceramic insulating cylinder
- 10A, 10B, 10C: Bushing
- 12A, 12B, 12C: Bushing conductor
- 20: Aerial insulating operation rod
- 21: Insulating case
- 30: Electromagnetic operation device
- 40A, 40B, 40C: T-shaped cable head
- 41A, 41B, 41C: Insulating plug
- 42A, 42B, 42C: Cable
- 70, 70a, 70b: Switch unit
- 72: Roof
- 80: External case
- 81: Base
- 82: Mechanism case
- 83A, 83B, 83C: Stay
- 84: Link
- 85: Flange

## Claims

1. A switch unit comprising:
a switch (70) for making a fixed electrode (3) and a movable electrode (5) come into or out of contact with each other;
a first bushing conductor (12A) electrically connected to the fixed electrode (3);
a second bushing conductor (12B, 12C) electrically connected to the movable electrode (5);
an operation mechanism (30) for supplying a driving force to the switch (70); and
an insulating case (21) covering the switch (70), the first bushing conductor (12A), and the second bushing conductor (12B, 12C), wherein
a direction of movement of the movable electrode (5) and the operation mechanism (30) are virtually in alignment.

2. The switch unit according to Claim 1, wherein the first bushing conductor (12A) and the second bushing conductor (12B, 12C) are located laterally to the insulating case (21).

3. The switch unit according to Claim 1 or 2, wherein the switch (70), the first bushing conductor (12A), and the second bushing conductor (12B, 12C) are located virtually in the same plane.

4. The switch unit according to Claim 1 or 2,
the insulating case (21) further comprising:
a third bushing connected to the first bushing conductor (12A); or
a fourth bushing connected to the second bushing conductor (12B, 12C).

5. The switch unit according to Claim 1 or 2, wherein the movable electrode (5) and the operation mechanism (30) are located coaxially and a driving force is supplied through an insulating operation rod (20) located coaxially with the movable electrode (5) and the operation mechanism (30).

6. The switch unit according to Claim 1 or 2, wherein the movable electrode (5) and the operation mechanism (30) are disposed out of alignment and a driving force is supplied through an insulating operation rod (20) located coaxially with the movable electrode (5) and a link connecting the insulating operation rod (20) and the operation mechanism (30).

7. The switch unit according to Claim 1 or 2, further comprising:
an insulating operation rod (20) for transmitting a driving force of the operation mechanism (30) to the movable electrode (5), wherein
a space around the insulating operation rod (20) in which an insulating gas is encapsulated is sandwiched between a first bellows (2) provided near the switch (70) and a second bellows (2A) provided near the operation mechanism (30), and
when the insulating operation rod (20) moves, an amount of change in volume of the first bellows (2) is virtually equal to an amount of change in volume of the second bellows (2A).

8. A rail car, wherein
the switch unit (70) according to Claim 1 or 2 is installed on a roof (72) in a manner that a direction of movement of the movable electrode (5) and a traveling direction of the rail car virtually coincide, and
a first cable head (40A) connected to the first bushing conductor (12A) and a second cable head (40B, 40C) connected to the second bushing conductor (12B, 12C)
can be connected or disconnected.

9. The rail car according to Claim 8, further comprising:
an external case (80) which covers the switch unit (70) laterally and from above and mechanically holds a first cable (42A) connected to the first cable head (40A) and a second cable (42B, 42C) connected to the second cable head (40B, 40C) .
